Europäisches Patentamt

European Patent Office

Office européen des brevets

(11) Publication number: **0 283 222 B1**

## EUROPEAN PATENT SPECIFICATION

(45) Date of publication of patent specification: **12.01.94**

(51) Int. Cl.⁵: **G01S 7/48**, G01S 17/06, G02F 2/00, G01B 9/02

(21) Application number: **88302159.4**

(22) Date of filing: **11.03.88**

(54) **3-Dimensional vision system utilizing coherent optical detection.**

(30) Priority: **20.03.87 US 28317**

(43) Date of publication of application:
**21.09.88 Bulletin 88/38**

(45) Publication of the grant of the patent:
**12.01.94 Bulletin 94/02**

(84) Designated Contracting States:
**AT BE CH DE ES FR GB GR IT LI LU NL SE**

(56) References cited:
**EP-A- 0 189 217      DE-A- 3 231 025
US-A- 3 717 843      US-A- 4 188 122
US-A- 4 572 662      US-A- 4 594 000
US-A- 4 611 912**

**APPLIED OPTICS, vol. 21, no. 10, May 1982, pages 1732-1737, Optical Society of America, New York, US; J.A. MONJES et al.: "Reflection-transmission phase shift: interferometer and viewing optics"**

**IBM TECHNICAL DISCLOSURE, vol. 14, no. 7, December 1971, pages 1949-1950, New York, US; R.W. HARRISON: "Coaxial laser interferometer"**

**PATENT ABSTRACTS OF JAPAN, vol. 7, no. 142 (P-205)[1287], 22nd June 1983;& JP-A-58 55 812 (TOKYO SHIBAURA DENKI K.K.) 02-04-1983**

**IEEE Spectrum, February 1987, pages 52-57; A. Linke, P.S.Henry: "Coherent optical detection: a thousand calls on one circuit"**

(73) Proprietor: **DIGITAL OPTRONICS CORPORATION
360 Herndon Parkway
Herndon Virginia 22070(US)**

(72) Inventor: **Goodwin, Frank Eugene
9121 Lyon Park Court
Burke Virginia 22015(US)**
Inventor: **Simonson, Dana
10647 Summer Oak Court
Burke Virginia 22015(US)**

(74) Representative: **Needle, Jacqueline et al
W.H. BECK, GREENER & CO
7 Stone Buildings
Lincoln's Inn
London WC2A 3SZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 283 222 B1

# Description

The present invention relates to a three-dimensional vision system utilizing coherent optical detection. More particularly, the present invention relates to a real-time, high-resolution, optical scanning vision system capable of providing a 256 x 256 x 256 volume of information about a target at rates approaching 10 frames per second.

Many known vision systems are capable of providing information about a target. For example, television cameras can provide moderate-resolution, two-dimensional images of a target in real time. Likewise, White (structured light) scanners are capable of providing high-resolution images, but not in real time. Basically, all known vision systems must strike a balance between resolution and scan time. Systems providing high-resolution images are not capable of providing real-time scanning, and conversely, real-time systems only provide moderate-to-low resolution images (usually two-dimensional). Thus, applications which require high-resolution, three-dimensional, real-time imaging systems are presently unfulfilled.

Recently, advances in optical technology have enabled the use of coherent (heterodyne) optical detection techniques. Such coherent techniques have provided a 1000-fold increase in the amount of information able to be detected for each pixel or voxel of the target. The article entitled "COHERENT OPTICAL DETECTION; A THOUSAND CALLS ON ONE CIRCUIT", by Link and Henry, IEEE SPECTRUM, February 1987, pp. 52-57 describes the present state of optical heterodyne reception.

The advantages of coherent optical detection are fundamental. The information carrying capacity of the optical beam reflected from the target is orders of magnitude greater than other available systems. Briefly, the use of optical heterodyne detection allows for optical radiation detection at the quantum noise level. As such, coherent optical systems provide greater range, accuracy, and reliability than many known prior art telemetry and vision systems. For example, coherent optical systems are capable of providing 1000-times faster scanning for a given precision. This means that the optical beam is not required to dwell upon a specific location on the target for very long in order to obtain sufficient information about the characteristics of that target location. Likewise, coherent optical systems can provide 1000-times more precision for a given scanning speed. Also, each measurement yields a unique, unambigious reading. Also, rough surfaces may be easily scanned using radar processing techniques. Coherent optical system also can provide a greater scanning range, a greater working depth of field, and may also operate in ambient light conditions.

Briefly, optical heterodyne detection provides a source light beam which is directed to a target and reflected therefrom. The reflected light beam is then mixed with a local oscillator light beam on a photodetector to provide optical interference patterns which may be processed to provide detailed information about the target. Optical heterodyne techniques takes advantage of the source and reflected light beam reciprocity. For example, these light beams are substantially the same wavelength and are directed over the same optical axis. This provides an improved signal-to-noise ratio and sensitivity. The signal-to-noise ratio is sufficiently high so that a small receiving aperture may be used, in contrast to known systems. Since a small receiver aperture can still provide detailed information about the target, the scanning optics of a vision system may be made very small and provide related increases in scanning speed. For example, a coherent optical system using a 1/2″ aperture can scan much faster than a 4″ aperture used with a direct optical detection system.

Prior art shows that several laser systems have been applied to metrology, and to some extent to gauging. The best known of these is the interferometer which has become a standard for precision measurements. However, the interferometer only measures changes in distance and must be implemented with precisely oriented cooperative reflectors. The proposed invention achieves precise measurement of absolute distances off ordinary and rough surfaces. Other prior art laser applications to gauging achieved distance measurements with incoherent detection and triangulation of a laser source and detection system. The accuracy and versatility of such systems are extremely limited.

Key technologies of AlGaAs laser diodes and fiber optical components are enjoying a burst of development for applications in telecommunications. Because of these efforts, recent improvements in the quality of injection laser diodes provide the coherence length and wave length tuning range needed for a precision, coherent optical scanning system. The small size of the injection laser diode and high-technology integrated optical assemblies make possible the development of a new family of small, low-cost, precise scanning sensors which are orders of magnitude more accurate and more reliable than their more conventional counterparts.

The fundamental concept of coherent optical detection used in the present invention is based on the FM CW radar principle. The FM optical source produces a continuous beam of radiation which is directed at the target. A local oscillator beam is derived from the source light beam and directed to a photodetector. Light reflected from the target is also directed to the photodetector. Since the detector sees energy reflected from the target as well as directly from the source, interference beats are detected as the frequency is swept over the interval ΔF. The rate of these beats is a function of the range as well as the magnitude of the frequency interval. This technique allows a tremendous amount of information concerning the target to be derived from the reflected light beam.

One coherent optical detection system is described in U.S. Patent No. 4,611,912 to Falk et al. Falk et al '912 describes a method and apparatus for optically measuring a distance to and the velocity of a target. In Falk et al, a laser diode provides a linearly polarized, amplitude modulated (with frequency modulated sub carrier) source light beam. The source light beam is directed to a polarization dependent beam splitter which reflects it toward the target. Between the beam splitter and a target is disposed a quarter wave retardation plate which converts the linearly polarized source light beam to right-hand circularly polarized optical radiation. Between the quarter wave plate and the target, a local oscillator reflector plate reflects approximately 1% of the source light beam back toward the beam splitter, while allowing approximately 99% of the source light beam to pass toward the target. Light reflected from the target and the local oscillator beam are thereby converted from right-hand circularly polarized optical radiation to left-hand circularly polarized optical radiation. These beams then pass back through the quarter wave plate and are thereby converted to linearly polarized light beams. These linearly polarized light beams pass through the polarizing beam splitter and are concentrated on a PIN diode by a collecting optical lens. Thus, the local oscillator and the return beam are both linearly polarized in the same direction and are directed along the same optical axis. Thus, the PIN diode detects an optically mixed signal containing the local oscillator beam and the light beam reflected from the target.

However, an extreme disadvantage of the Falk et al '912 system is that very close alignment is required between the optical components. Thus, the laser diode, the beam splitter, the quarter wave plate, the local oscillator reflecting plate, and the PIN diode must be carefully adjusted before usable signals may be obtained. In addition, such close adjustment allows for rapid system degradation with temperature changes and mechanical shocks. Additionally, the Falk et al '912 system only provides apparatus for measuring distances and velocity. Such a system would be difficult to adapt to a scanning vision system since scanning components must be added which would further exacerbate the optical alignment sensitivity problems noted above.

U.S. Patent 4,594,000 to Falk et al also discloses a system for optically measuring the distance to and velocity of a target. This system is somewhat like Falk et al '912, but incorporates a reference arm to provide more precise measurements of distance and velocity. Specifically, the FM source light beam is also provided to a reference arm which also includes a polarization-dependent beam splitter, a quarter wave plate, and a local oscillator reflecting mirror. The local oscillator reflecting mirror again reflects a local oscillator beam back through the beam splitter to a PIN diode. The reference source light beam is allowed to propagate through the local oscillator reflecting mirror into a fiber optic coil of known length having a reflecting element at the end thereof. The reference source light beam is reflected back through the fiber optic coil and mixes with the local oscillator beam at the PIN diode. Means are then provided to determine a representative value of the frequency of the output signal from both the target and reference arms. A processor is then utilized to calculate the distance and velocity of the target from the representative frequency values derived from both the source and the reference optical heterodyne systems. While this system is capable of providing great precision in velocity and distance measurements, it also suffers the optical alignment sensitivity problems of Falk et al '912.

Therefore, for a practical, three-dimensional, scanning vision system, there is a requirement for an optical detection system whose optical alignment sensitivity is extremely low.

From US-A-4 188 122 there is known an optical apparatus comprising beam splitter means arranged to split a source light beam into a target beam and a reference beam, means arranged to direct said target beam onto a target from which it is reflected whereby a return light beam is produced, means arranged to cause both said reference beam and said return beam to have the same polarization, and means arranged to direct said reference beam and said return beam along the same optical axis, and also an optical detection method comprising the steps of splitting a light beam into a target beam and a reference beam, directing said target beam onto a target to produce a return beam which is reflected from said target, causing both reference beam and said return beam to have the same polarization, and directing both said reference beam and said return beam along the same optical axis.

According to one aspect of the present invention, there is provided an optical apparatus of the above-mentioned type, characterised in that said source light beam has a first polarization, and said target and reference beams are formed by said beam splitter means to also have said first polarization, said return light beam having a second polarization which differs from said first polarization, in that said means arranged to cause both said reference beam and said return beam to have the same polarization comprises converting means arranged to convert the polarization of one or more of the return beam, target beam or reference beam, and in that said means arranged to direct said reference beam and said return beam along the same optical axis comprises diverting means arranged to divert said beams.

Advantageously, the optical apparatus of the present invention includes a frequency modulated optical source, and provides an optical heterodyne detection scheme not requiring a reference arm, and a local oscillator combining (peel-off) technique which reduces optical alignment sensitivity.

Preferably the apparatus further comprises a photo detector on said optical axis.

Advantageously, said diverting means comprises retroreflector means which can ensure that the return light beam will be co-linear with the local oscillator beam, thus making careful optical alignment unnecessary. The use of the retroreflector also allows the incidence angle of the polarizing prism to be adjusted, thus selecting the splitting ratio between the signal beam and the local oscillator beam simply by rotating the prism. This has no effect on the mixing efficiency since all reflections are at the same splitter interface.

In a particularly useful embodiment, the laser diode, the PIN detector, the beam splitter, the quarter wave plates, and the retroreflector are all integrally mounted in a compact housing. This integral mounting eliminates any optical degradation due to temperature changes, mechanical shock, etc. Such a compact assembly provides obvious advantages in production, maintenance, and design.

According to another aspect of the present invention there is provided an optical detection method of the above-mentioned type, characterised in that said light beam has a first polarization and in that said target and reference beams formed also both have said first polarization, in that said return beam has a second polarization which differs from said first polarization, in that said reference beam and said return beam are caused to have the same polarization by converting the polarization of one or more of said beams, and in that said reference and return beams are directed along the same optical axis by diverting said beams.

Thus, the apparatus and method of the present invention can be employed as part of a high-resolution, three-dimensional, real-time scanning vision system having a wide variety of applications such as robot vision, materials handling, Q/C inspection, physical security systems, military and space robots, etc.

The advantageous features of the present invention may be more readily understood from the following detailed description of the presently preferred exemplary embodiment when taken together with the attached drawings in which:

Figure 1 depicts a block diagram showing the over-all system according to the present invention;

Figure 2A and B depict a more detailed block diagram according to the preferred embodiment;

Figure 3 is a schematic diagram showing the sensor optics according to the preferred embodiment;

Figure 4 is a plan view of an integrally mounted sensor optical subsystem according to a variant of the preferred embodiment; and

Figure 5 is an alternative embodiment of the sensor optics.

The present invention relates to a rapid-scanning, three-dimensional optical vision system. A field of 256 x 256 x 256 pixel elements, and 256 range bins can be mapped at frame rates of nearly 10 frames per second. Improvements in laser diode and photodetector technology could allow frame rates of nearly 60 frames per second to be achieved with the present invention.

Although coherent optical detection utilizing injection laser diodes are inherently capable of high precision range measurement (approaching 0.0001 inches), the dwell time per pixel for extreme precision is incompatible with high frame rates. Relaxation of range resolution results in a direct reduction of the required mapping time per frame. Such an arrangement provides an effective three-dimensional vision system whose dynamic requirements call for higher frame rates. For a serialized data stream having 256 range cells, the data rate for 60 frames per second is 32 megabits per second. Each frame storage requirement is thus 66 kilobytes. For such a system, a pixel rate of 3.9 million pixels per second may be achieved where the target area to be mapped is approximately 1 meter x 1 meter with a depth range of 1 meter. In such a system, the pixel size would be approximately 4 mm x 4 mm with a range resolution of 4 mm.

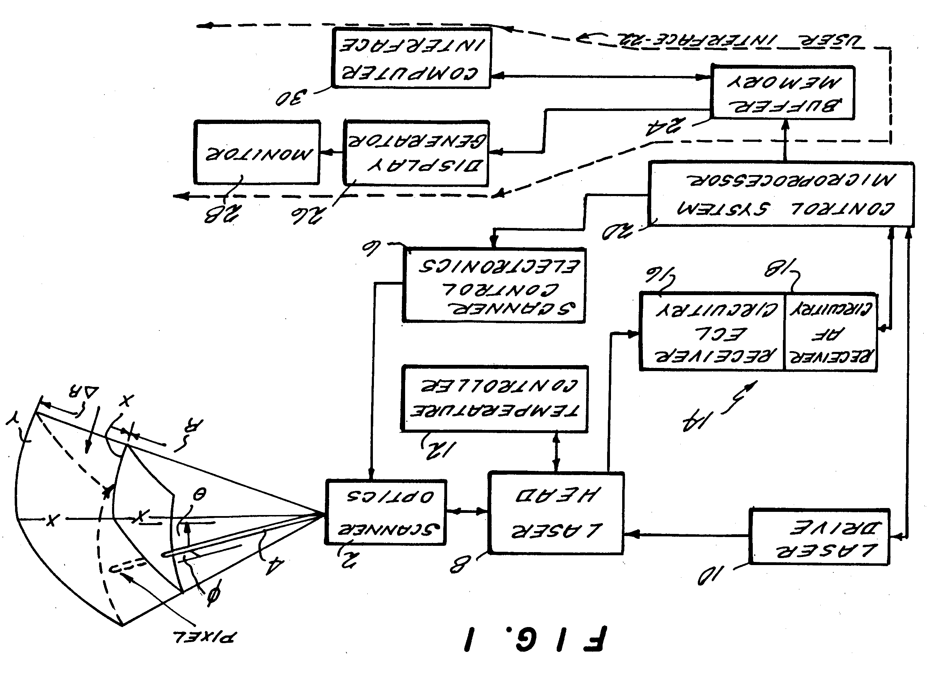

Referring to Figure 1, the basic components of the present invention will be described. A three-dimensional target is denoted by curved surfaces X and Y. In a preferred embodiment, the dimensions of curve surface Y are approximately 1 meter x 1 meter. The range resolution of the system $\Delta R$ is also 1 meter, thus providing a 1 meter cube volume from which target information may be derived.

Scanner optics 2 scans a source light beam 4 through the target volume. The source light beam scans the target volume 1 pixel (more appropriately voxel) at a time. Scanner optics 2 is controlled by scanner control electronics 6 to scan source light beam 4 through the target volume utilizing changes in azimuth angle $\Phi$, and elevation angle $\theta$. Those of skill in this field will recognize that many scanning techniques may be utilized within the scope of the present invention. For example a serpentine scan pattern or a raster scan pattern may be used. A more detailed description of the scanning control will be provided below.

Laser head 8 provides the optical source light beam to scanner optics 2. Laser head 8 is driven by laser driver 10 which acts to modulate the source light beam. In the preferred embodiment, the laser driver 10 provides frequency modulation to the source light beam.

Temperature controller 12 acts to stabilize laser head 8 to provide a stable source light beam.

After reflection from the target, the return light beam passes back through the laser head 8 to receiver circuitry 14. Receiver circuitry 14 may include receiver ECL circuitry 16, and receiver RF circuitry 18. The structure and functions of such circuitry are known in the field and will not be described in detail. Suffice it to say that this combination of ECL and RF circuitry provides a compact yet efficient subsystem for processing the received signal.

Control system microprocessor 20 acts to control the system, and to output usable signals to user interface subsystem 22. Microprocessor 20 thus controls the scanning of the source light beam through scanner control electronics 6. The control system microprocessor 20 also controls the laser driver 10 to provide the appropriate modulation to the source light beam. The microprocessor also acts to control receiver circuitry 14, and to receive output signals therefrom. Finally, control system microprocessor 20 outputs usable signals to user interface 22, including a buffer memory 24. Those of skill in this field understand that a wide variety of user equipment may be implanted in user interface subsystem 22. For example, a display generator 26 may provide image data to a monitor 28. Likewise, computer interface 30 may be coupled to buffer memory 24 so that usable signals may be provided to a further processing system, such as the controller of a NC (Numerically Controlled) robot.

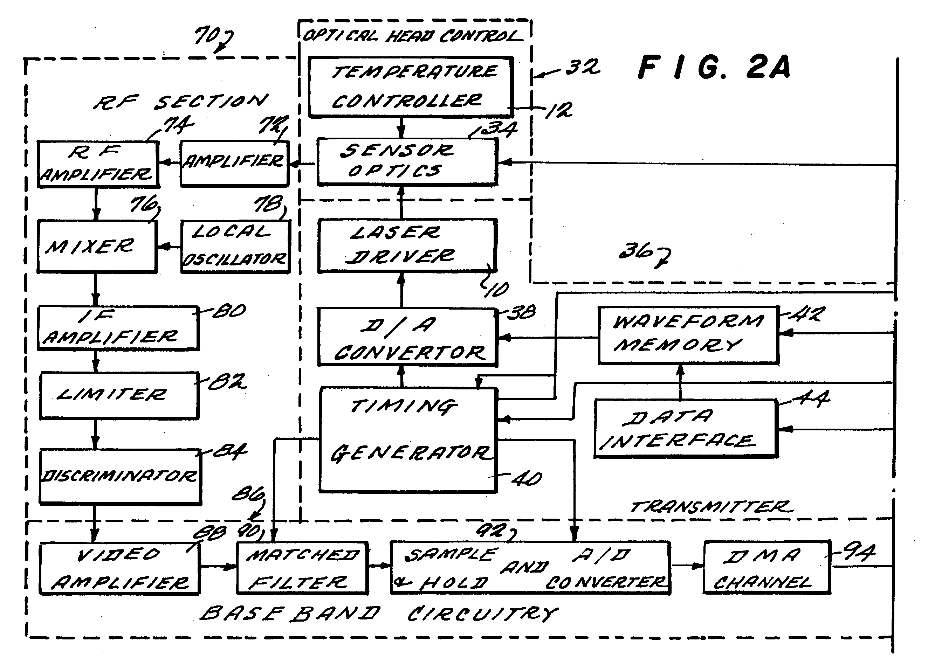

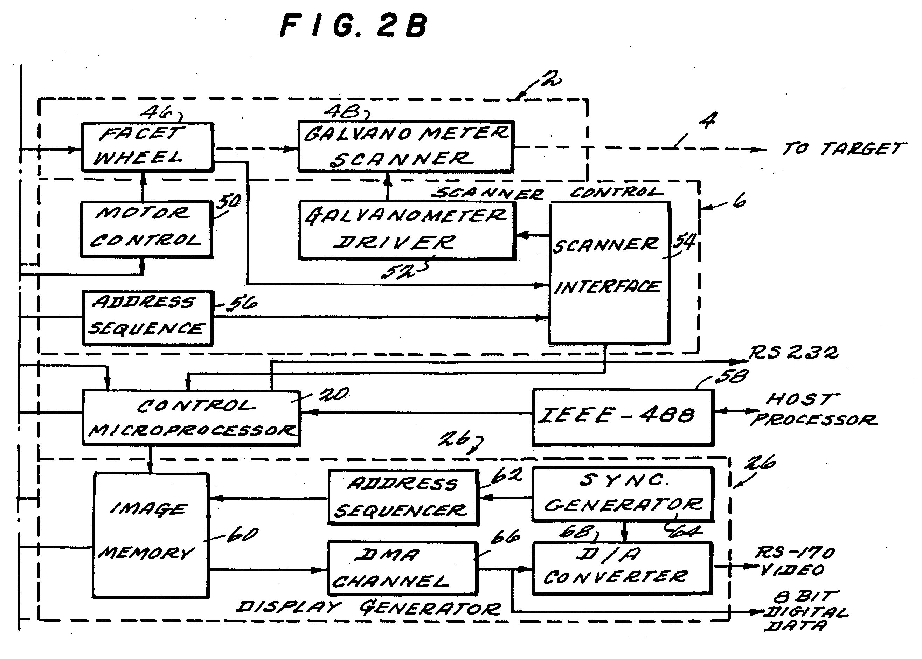

Figures 2A and 2B show a more detailed block diagram of the presently preferred exemplary embodiment. In Figure 2A, optical head control 32 includes temperature controller 12 and sensor optics 34. Sensor optics 34 includes laser head 8 depicted in Figure 1. Temperature controller 12 is used to maintain a stable operation of sensor optics 34.

Figure 2A also depicts a transmitter section 36 which drives the sensor optics 34. Transmitter section 36 includes laser driver 10 fed by a digital-to-analog converter 38, which is in turn driven by timing generator 40. Timing generator 40 is controlled by control microprocessor 20 (depicted in Figure 2B). D/A converter 38 is also fed by waveform memory 42, which is controlled by microprocessor 20 through data interface 44.

The pixel rate of the system is determined by the laser driver 10 which delivers a pulse to a horizontal counter (not shown) for each FM sweep of the laser source, while the horizontal counter delivers a pulse to a vertical counter (not shown) at the end of each sweep. Such counters may be used to control horizontal facet wheel 46 and vertical galvanometer scanner 48 (see Figure 2B) and set the address in the memory address register.

Referring to Figure 2B, the source light beam is provided to scanner optics 2. Scanner optics 2 may include a facet wheel 46 for controlling the horizontal scan, and a galvanometer scanner 48 for controlling the vertical scan. However, persons of skill in this field will understand that a wide variety of mechanical and electronic scanning devices may be used to scan the source light beam across the target. For example, holographic scanners may be used since the present invention encompasses single mode lasers. In general, the scanning methodology may be described as follows:

A pixel may be defined as an illuminated spot with a diameter d, an area $d^2$, and a thickness $\delta R$, where $\delta R$ is defined as the range resolution. A frame is defined as an arbitrary surface of overall dimensions X, Y, and a thickness of $\Delta R$ (depth of range). Thus, the number of pixels in a frame is equal to $(XY)/d^2$. The range precision may be defined as:

$$\delta R = c/(4\Delta f) = R/2n$$

where n = the number of counts per pixel. Thus, the range in time may be calculated as follows.

$$\tau_r = n/\dot{n} = R/2\delta R\dot{n}$$

where $\dot{n}$ = the counting rate. The pixel time may be calculated as follows:

$$\tau_p = \tau_r = \tau_s = (R/2\delta R\dot{n}) + \tau_s$$

where $\tau_s$ = the step time. Thus, the frame time T may be calculated as follows:

$$T = (XY/d^2) \times ((R/2\delta R\dot{n}) + \tau_s).$$

The optical heterodyne fringe counting rate $\dot{n}$ or signal frequency $f_s$ assumed for these estimates is approximately 300 MHz. The proposed technique to measure the signal frequency is through the use of a frequency discriminator whose output bandwidth is matched to the pixel bandwidth. Each pixel position and range can be encoded. For a serialized data stream having 256 range cells, the data rate for 4 frames per second is two megabits per second. Each frame storage requirement is thus 66 kilobytes.

As presently envisioned, the present invention may include a slow scan or a fast scan technique depending upon the target to be imaged. Requirements for scanning optics for the slow scan and the fast scan systems are different from each other. The slow scan needs can be met with X-Y galvanometers while those of the fast scan may require either a spinning facet wheel or resonant oscillators. Since the mirrors and galvanometers have mechanical inertia, a step time is required to move the beam from one pixel to another. Step time can be minimized by choosing a scan methodology such that the beam always steps only one beam position at a time. Such a scan system is possible by eliminating the retrace step from both the horizontal and vertical scans, thereby producing a serpentine type scan. The serpentine scan raster is therefore not directly compatible with television displays. The slow scan pixel rate is assumed to be 262,144, allowing for a 4 microsecond pixel time and a scan field of 256 x 256 = 65,356 pixels. The frame (field) rate is thus 4 frames per second. However, the image may be stored in a buffer memory so that every other horizontal scan line is stored in reverse sequence. One complete scanning sequence therefore consists of two frames. The first is serpentine scanned from upper right to lower left, while the second retraces this pattern in reverse. Known memory storage techniques may be used to store the image. The above-described scanning method has the effect of producing a computer image that appears as if it were scanned in a conventional television type raster, and thus commercially available video display generators may be used to produce RS-170 compatible video for presentation on a video monitor.

Circuitry required to generate the serpentine scan may be easily provided. An 8 bit counter may count pixels within each horizontal scan line. Similarly, a second 8 bit counter keeps track of even and odd frames. The outputs of the X and Y position counters are fed to a set of exclusive OR gates (not shown) that allow position indices to be complemented. The least significant bit of the Y address counter is used to control inversion of the X addresses on odd scans. In a similar manner, the frame counter is used to invert the Y addresses on odd numbered frames. The resultant X-Y scan sequence is used both to control the position of the scanner and the storage address of the corresponding pixel.

An alternative scan pattern may be a fast scan pattern which could upgrade the visions system to approximately 60 frames per second. Thus, a scanning system may be considered which is capable of fast-scan as well as slow-scan without significant modification. In the fast-scan case, the horizontal scanning pattern may be produced by a facet wheel or holographic wheel that is synchronized to pixel timing signals from the laser drive circuitry. A modulo 256 clock is fed to the scan synchronization input of a spinning facet wheel scanner. The scanner generates a uniform left-to-right scan pattern with virtually instantaneous (less than one pixel time) retrace time. The 8 bit counter that counts within an individual scan line is also used as the least significant part of a 16 bit pixel address that is transferred to the control processor. The carry output of the horizontal pixel counter is used to enable the vertical scan counter. This 8 bit counter is used as the most significant part of the pixel address for the control processor, and also drives a conventional galvanometer scanner to provide the vertical scan. However, unlike the horizontal scan which always performs left-to-right scanning, the vertical scanner alternates between top-to-bottom and bottom-to-top scan patterns, thereby never having to move in increments of more than one pixel at a time.

Returning to Figure 2B it can be seen that scanner optics 2 is controlled by scanner control 6. Scanner control 6 includes a motor control 50 for driving facet wheel 46. Motor control 50 is controlled by control microprocessor 20 through timing generator 40. Galvanometer scanner 48 is controlled by galvanometer driver 52 which is controlled by scanner interface 54. Scanner interface 54 is, in turn, controlled by microprocessor 20 and is fed by address sequencer 56 and facet wheel 46.

Also shown in Figure 2B is IEEE-488 interface 58 which may be used to connect control microprocessor 20 to a host processor in a given vision system.

Also shown in Figure 2B is display generator 26. Display generator 26 may include an image memory 60 which is also controlled by control micro-processor 20. Image memory 60 is also fed by address sequencer 62 which is controlled by sync generator 64. The output of image memory 60 is provided to DMA channel 66 which can provide an 8-bit digital data output, and/or can feed D/A converter 68 which then provides an RS-170 analog video output.

After the source light beam is reflected from the target, it returns to sensor optics 34 for detection processing. Referring again to Figure 2A, an electrical output from sensor optics 34 is provided to RF section 70. Specifically, the electrical signal is provided to an amplifier 72, and then to an RF amplifier 74. The amplified signal is then provided to a mixer 76 which mixes it with a local oscillator signal from local oscillator 78. The mixed signal is then provided to intermediate frequency amplifier 80 for amplification. The IF signal then proceeds to limiter 82 and to discriminator 84 in a known manner. The output signal of discriminator 84 is then provided to baseband circuitry 86. Specifically, the output of discriminator 84 is fed to a video amplifier 88 which amplifies the signal and provides it to a matched filter 90. The matched filter 90 is also controlled by timing generator 40 from transmitter section 36. The output of matched filter 90 is provided to a sample-and-hold and A/D converter 92. The digitized signal is then provided to image memory 60 (See Figure 2B) through DMA (Direct Memory Access) channel 94. In such a fashion, image memory 60 receives information regarding each pixel scanned on the target. Thus, Figures 2A and 2B depict an exemplary 3-dimensional scanning system according to the present invention.

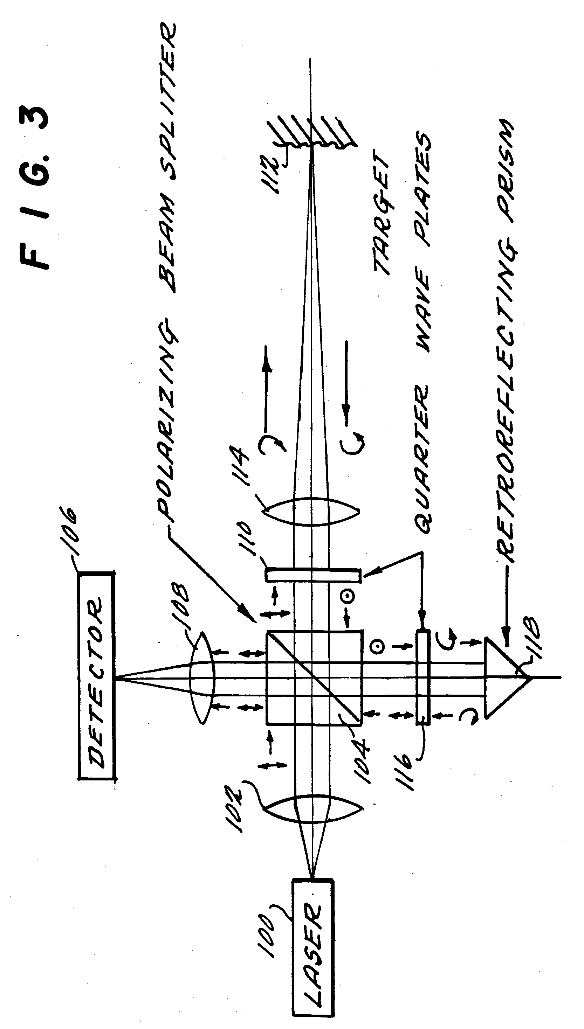

Turning now to Figure 3, the sensor optics 34 will be more fully described. Sensor optics 34 incorporates a unique method of providing a local oscillator beam such that alignment sensitivity in the sensor head is greatly reduced. In order for a coherent optical vision system to function, there must be mixing between the return light beam and the local oscillator beam. The efficiency of the mixing is determined by how closely matched that radii of curvature of the two beams are, and how well the polarizations are aligned. Prior art systems required at least two independent critical optical adjustments to change the center of focus of the signal beam. This made a zoom focus system nearly impossible. The critical nature of the adjustments made the system unstable and very difficult to keep in alignment. The present invention includes a unique local oscillator peel-off apparatus, which does not require sensitive optical adjustment and readjustment when the focus is changed. The present invention is also extremely stable with respect to optical alignment.

According to one embodiment of the present invention, injection laser diode 100 provides a single mode, linearly polarized source light beam. For example, the source light beam may be horizontally polarized as depicted in Figure 3. First, the source light beam is collimated by collimator lens 102. The collimated, horizontally polarized source light beam is then passed through polarizing beam splitter 104. The local oscillator beam is generated in polarizing beam splitter 104 due to inherent imperfections in thin film coating dialectrics used in making polarizing prism cubes. Part of the light in the laser polarization state is reflected rather than being transmitted through the beam splitter.

Thus, the horizontally polarized local oscillator beam is deflected in the polarizing beam splitter 104 and directed toward photo detector 106 through focusing lens means 108. The signal light beam is transmitted through polarizing beam splitter 104 toward quarter wave plate 110. Quarter wave plate converts the horizontally polarized source light beam into a circularly polarized light beam, for example, right-hand circular polarization. The circularly polarized source light beam is then focused on target 112 by focusing optics 114. Note that target 112 may be a diffuse surface. Also note that focusing optics 114 may include a single lens or a lens set (e.g. a telescope). Upon reflection from the target, the circularly polarized light beam reverses its direction of circular rotation. Therefore, the light reflected by the target which is captured by focusing optics 114 is circularly polarized in the opposite direction of the source light beam, for example, left-hand circular polarization. Note that focusing optics 114 also acts to collimate the return light beam.

The collimated return light beam passes again through quarter wave plate 110 where it is converted back to a linear polarization state perpendicular to that of the source light beam, for example, vertical polarization. Most of this light is then reflected in polarizing beam splitter 104 and directed toward quarter wave plate 116.

Quarter wave plate 116 converts the linear polarization return light beam into a circularly polarized light beam, for example from a vertical polarization state to a left-hand circularly polarized light beam.

The circularly polarized light beam is then reflected by a retroreflector, for example retroreflecting prism 118. By placing retroreflecting prism 118 on the same optical axis as the local oscillator light beam, the return signal will be colinear with the local oscillator beam, thus making careful optical alignment unnecessary.

The light beam reflected from retroreflecting prism 118 is circularly polarized in the opposite rotation of the incoming light beam, for example, right-hand circular polarization. This return light beam again passes through quarter wave plate 116, where it is converted to the same linear polarization state as the local oscillator beam, for example a horizontal polarization. This beam now passes through polarizing beam splitter 104 where the mixing occurs. The prism interface is the point of mixing of the two beams, and since both beams are collimated at this point and are of the same polarization state, perfect mixing is insured. The mixing thus creates a changing optical interference pattern which is used by photo detector 106 to derive detailed information about the target. The mixed beam is imaged on photo detector 106 which converts the optical interference pattern to an electrical signal which can be converted to a range number understandable to the host processor.

An additional advantage of using the apparatus depicted in Figure 3 is that the loss of the polarizing beam splitter 104 is highly dependent on incidence angle. Utilizing this feature makes it possible to select a splitting ratio between the source light beam and the local oscillator light beam simply by rotating the polarizing beam splitter 104. This has no effect on the mixing efficiency since all reflections are at the same interface. The quarter wave plates, the retroreflector, the focusing optics, and the photo detector are rotated approximately twice the angle of the beam splitter rotation to keep the beams in the center portion of the optics to limit aberrations.

The only critical adjustment of the optical system of Figure 3 is that of collimating the laser. This collimation can be accomplished with relative ease to a high degree of stability. The system will then remain in proper alignment regardless of temperature. Mechanical stress also has a minimal effect on this system. Most displacement of parts are compensated for by the self-aligning properties of the retroreflector and by the single interface wave mixing at the polarizing prism.

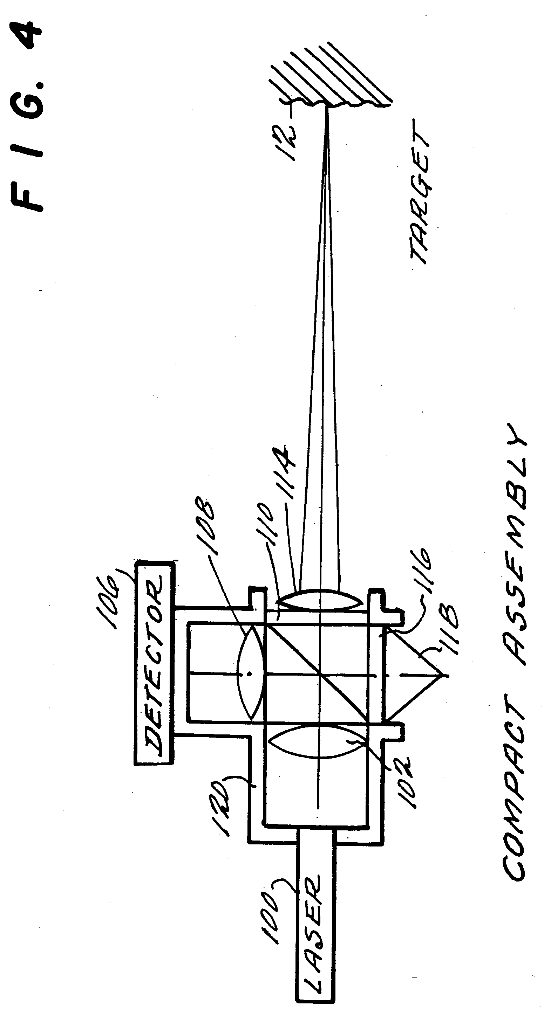

Since the optical alignment of the system of Figure 3 is simple and is not critical to its performance, the main components can be integrally mounted together (for example, using optical epoxy) making the system very rugged and compact. Figure 4 depicts such a compact, rugged integral component.

Figure 4 depicts an integral housing assembly 120 which integrally mounts: laser 100; photo detector 106; lenses 102, 108, and 114; quarter wave plates 110 and 116; and retroreflector 118. The use of optical heterodyne detection and retroreflector 118 insures that the optical aperture, (diameter of lens 114) may be made very small, thus producing a small compact device. The compact assembly of Figure 4 is perfectly suited to mass-production techniques since optical alignment of laser 100 and lens 102 may easily be made before integral housing 120 is sealed. In such a fashion, the sensor optics section of the three-dimensional scanning vision system may be made extremely reliable and compact.

One of skill in this field will readily perceive a number of alternative embodiments. For example, photodetector 16 may comprise a photoconductor, a PN photodetector, and avalanche photodetector, photomultipliers, a resonant optical cavity detector, pyroelectrical detectors, and other known means for detecting a light beam. Currently, the PIN detector is preferred because of its heightened sensitivity. Nevertheless, different applications of the present invention may involve alternate detectors.

Likewise, those of skill in this field will readily understand that the exact embodiment of Figure 3 may be modified without departing from the teachings of this invention and the scope of the appended claims. For example, the polarizing beam splitter 104 may have an interface configured at approximately 90 degrees from that depicted in Figure 3, so that the local oscillator beam is directed toward retroreflector 118. Retroflector 118 reflects the local oscillator beam back through polarizing beam splitter 104 to detector 106. Meanwhile, the signal beam passes through polarizes beam splitter 104, is reflected from the target 112 and returned to polarizing beam splitter 104 where it is now reflected toward detector 106. Of course, the same advantages achieved by the configuration of Figure 3 can also be achieved by the above-described alternate.

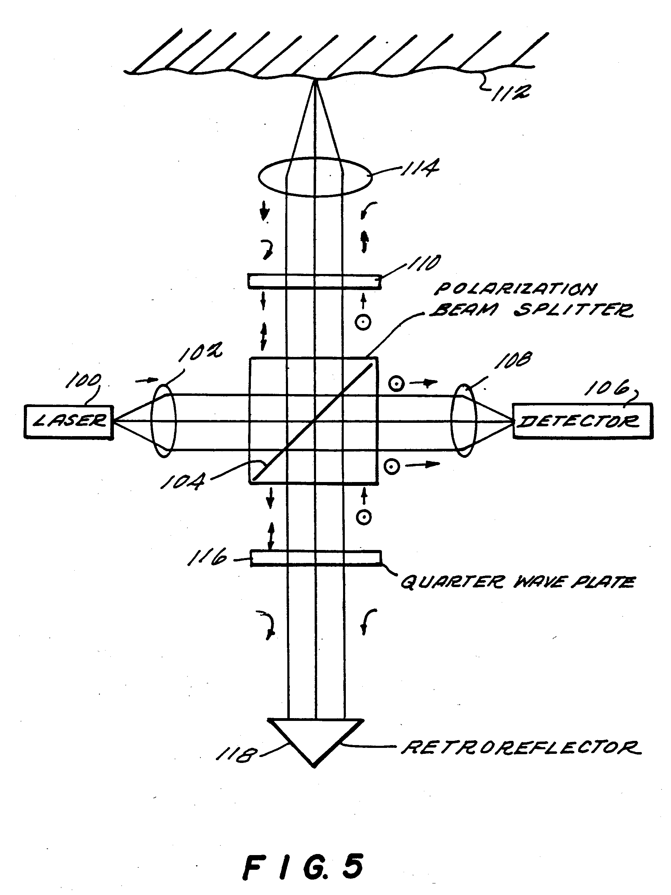

A further alternative is depicted in Figure 5. In Figure 5, laser source 100 provides a horizontally polarized light beam through collimating lens 102 toward beam splitter 104. At the beam splitter, the signal light beam is reflected toward target 112, while the local oscillator beam is passed through the beam splitter 104 toward detector 106. Thus, the local oscillator propagates directly from laser source 100 to detector 106.

In beam splitter 104, the signal light beam is reflected from the beam splitter interface and directed toward target 112. The horizontally polarized signal light beam passes through quarter wave plate 110 where it is converted into circular polarization, for example, right hand circular polarization. The circularly polarized signal light beam is then focuses by lens 114 on target 112.

Light reflected from target 112 is reflected as a return light beam having an opposite polarization from the incident signal light beam. For example, a left hand circularly polarized light beam is reflected from target 112, through lens 114, and towards quarter wave plate 110. At quarter wave plate 110, the left-hand circularly polarized light beam is converted into vertically polarized light and directed toward beam splitter 104. The vertically polarized return light beam passes through beam splitter 104, is circularly polarized by quarter wave plate 116 and directed toward retroreflector 118. Retroflector 118 reverses the circular polarization, and passes the return light beam back through quarter waver plate 16 where it is converted into horizontally polarized light. The horizontally polarized light then reflects off the interface of beam splitter 104 and is directed toward detector 106. Again, both the local oscillator light beam and the return light beam are of the same polarization state.

A further alternative based on the Figure 5 configuration may be readily imagined. If the interface of polarization beam splitter 104 is rotated 90°, the signal light beam will be deflected first toward the retroreflector 118. After reflection, the signal light beam will pass through beam splitter 104 toward target 112. Upon reflection from the target, the return light beam will reflect off the interface of beam splitter 104 toward detector 106. Again, the functions of the quarter wave plate are the same as those described above. Thus, both the local oscillator light beam and the return light beam impinge on detector 106 in the same polarization state.

It can readily be perceived that the apparatus depicted in Figure 5 can also be mounted in a compact, rugged housing, as shown in Figure 4. Those of skill in this field can readily imagine that all such alternative structures share the same essential features for manipulating the polarization states of the respective light beams, together with the use of the retroreflector. All such alternative structures are to be included within the scope of protection afforded by the appended claims.

Likewise, the beam splitter means may be any device for splitting a beam, as described above. For example, a beam splitter prism, a coupler, or even cleaved fiber optic cable structures may be used in accordance with the present invention. Also, a retroreflector may include a cubed reflector, a plurality of cubed reflectors, or other equivalent structures for returning a beam along its optical axis. Again, all such equivalent structures are to be included within the scope of protection afforded by the following claims.

The overall performance of the above-described three-dimensional system is determined by the FM sweep, the width and rate of the laser source, and the speed of the electronics. It is expected that these parameters will improve with advances in optical developments. Thus, it is expected, that the vision system range, precision, and speed will improve with the development of more advanced optical components, such as electronically tunable injection laser diodes. Utilizing thermally chirped lasers, the present invention is capable of frame rates of 4 frames per second. With the use of electronically tuned laser diodes, frame rates approaching 60 frames per second may be reached. Of course, those of skill of this field understand that the teachings of this invention are applicable to improved optical components now being developed and to be developed in the future.

## Claims

1. Optical apparatus comprising beam splitter means (104) arranged to split a source light beam into a target beam and a reference beam, means (110, 114) arranged to direct said target beam onto a target from which it is reflected whereby a return light beam is produced, means (116) arranged to cause both said reference beam and said return beam to have the same polarization, and means (104, 118) arranged to direct said reference beam and said return beam along the same optical axis, characterised in that said source light beam has a first polarization, and said target and reference beams are formed by said beam splitter means (104) to also have said first polarization, said return light beam having a second polarization which differs from said first polarization, in that said means (116) arranged to cause both said reference beam and said return beam to have the same polarization comprises converting means (116) arranged to convert the polarization of one or more of the return beam, target beam or reference beam, and in that said means (104, 118) arranged to direct said reference beam and said return beam along the same optical axis comprises diverting means (104, 118) arranged to divert said beams.

2. Optical apparatus as claimed in Claim 1, further comprising a photo detector (106) on said optical axis.

3. Optical apparatus as claimed in Claim 1 or 2, wherein said means (110, 114) arranged to direct said target beam onto the target comprises means (110) arranged to convert said target beam to a third polarization, and said diverting means (104, 118) arranged to divert the reference beam or return beam comprises retroflector means (118).

4. Optical apparatus as claimed in Claim 3, wherein said means arranged to convert said target beam comprises first quarter wave means (110), optically coupled between said beam splitter means (104), and said target (112), to convert the polarization both of said target beam and of said return beam; and further comprising second quarter wave means (116), optically coupled between said beam splitter means (104), and said retroflector means (118), to convert the polarization of said return beam.

5. Optical apparatus as claimed in Claim 4, further comprising

   first lens means (102) arranged to collimate said source light beam and direct it to said beam splitter means (104),

second lens means (114) arranged to focus said target beam on said target (112); and

third lens means (108) arranged to focus said reference beam and said return beam along said optical axis.

6. Optical apparatus as claimed in Claim 5, further comprising:

optical source means (100) arranged to provide said source light beam having said first polarization; and

detector means (106) arranged to optically detect said same polarization reference and return beams and to provide an output signal containing information about said target.

7. Optical apparatus as claimed in Claim 6, further comprising a housing supporting said optical source means (100), said beam splitter means (104), said detector means (106), said first, second, and third lens means (102, 108, 114), and said first and second quarter wave means (110, 116).

8. Optical apparatus according to any preceding claim, further comprising

scanner means (2) arranged to scan said target beam across said target; and

processor means (20) controlling said scanner means.

9. Optical apparatus as claimed in any preceding claim, wherein

said beam splitter means is arranged to direct said reference beam in a first direction along said optical axis,

said directing means (110, 114) for said target beam comprises a first quarter wave plate (110) arranged to convert said first polarization target beam to a third polarization, and to convert the return beam, which is reflected from said target in a fourth polarization, to said second polarization;

said beam splitter means being arranged to reflect said second polarization return beam in a second direction along said optical axis;

and wherein said converting means (116) comprises a second quarter wave plate (116) arranged to convert the reflected second polarization return beam to a fourth polarization return beam;

and further comprising a retroflecting prism (118) arranged to receive said fourth polarization return beam and retroflect it along said optical axis in said first direction with said third polarization;

said second quarter wave plate (116) being arranged to convert the retroflected return beam to said first polarization return and reference beams along said optical axis in said first direction.

10. Optical apparatus as claimed in any of Claims 1 to 8, wherein

said beam splitter means (104) is arranged to direct said target beam along an optical target axis, and to transmit said first polarization reference beam along said optical axis,

said directing means (110, 114) for said target beam comprises a first quarter wave plate (110) arranged to convert said first polarization target beam to a third polarization, and to convert the return light beam, which is reflected from said target in a fourth polarization, into said second polarization;

said beam splitter means being arranged to transmit therethrough said second polarization return beam;

and wherein said converting means (116) comprises a second quarter wave plate (116) arranged to convert the transmitted second polarization return beam to a return beam having said fourth polarization;

and further comprising a retroflecting prism (118) arranged to receive said fourth polarization return beam and retroflect it along said optical target axis with said third polarization;

said second quarter wave plate (116) being arranged to convert the retroflected return beam to said first polarization to cause optical heterodyne mixing of said first polarization return and reference beams along said optical axis.

11. Apparatus for optically scanning a target comprising optical apparatus as claimed in any preceding claim, and further characterised by

a laser diode (100) arranged to provide said source light beam having a first polarization;

detector means (106) arranged to optically heterodyne detect said same polarization reference and return beams on the same optical axis, and to provide an output signal containing information about said target;

scanning means (2, 6) arranged to scan said target beam across said target; and

processor means (20) arranged to control said scanning of the target.

12. Apparatus as claimed in Claim 11, further comprising laser driver means arranged to sweep frequency modulate the source beam provided by said laser diode.

13. Apparatus as claimed in Claim 11 or 12, wherein said scanning means include:

    facet wheel means arranged to scan said target beam in a first direction; and

    galvanometer means arranged to scan said target beam in a second direction.

14. Apparatus as claimed in Claim 11 or 12, wherein said scanning means include a holographic scanner.

15. Apparatus as claimed in any of Claims 11 to 14, said detector means (106) includes a PIN detector.

16. Apparatus as claimed in any of Claims 11 to 15, wherein said processor means (20) receives said output signal from said detector means and includes means arranged to store a 256 x 256 x 256 volume of information about said target.

17. An optical detection method comprising the steps of splitting a light beam into a target beam and a reference beam, directing said target beam onto a target (112) to produce a return beam which is reflected from said target, causing both reference beam and said return beam to have the same polarization, and directing both said reference beam and said return beam along the same optical axis, said method being characterised in that said light beam has a first polarization and in that said target and reference beams formed also both have said first polarization, in that said return beam has a second polarization which differs from said first polarization, in that said reference beam and said return beam are caused to have the same polarization by converting the polarization of one or more of said beams, and in that said reference and return beams are directed along the same optical axis by diverting said beams.

**Patentansprüche**

1. Optische Vorrichtung mit Strahl-Teilermitteln (104), die so ausgebildet sind, daß sie einer Quellen-Lichtstrahl in einen Zielstrahl und einen Referenzstrahl teilen, Mitteln (110, 114) die so ausgebildet sind, daß sie den Zielstrahl auf ein Ziel richten, von welchem er reflektiert wird, wodurch ein Rücklauflichtstrahl erzeugt wird, mit Mitteln (116), die so ausgebildet sind, daß sie bewirken, daß der Referenzstrahl und der Rücklaufstrahl dieselbe Polarisation haben, und mit Mitteln (104, 118), die so ausgebildet sind, daß sie den Referenzstrahl und Rücklaufstrahl entlang derselben optischen Achse richten, dadurch gekennzeichnet, daß der Quellen-Lichtstrahl eine erste Polarisation hat und der Ziel- und Referenzstrahl von den Strahl-Teilermitteln (104) so gebildet wird, daß sie auch die erste Polarisation haben, wobei der Rücklauflichtstrahl eine zweite Polarisation hat, die sich von der ersten Polarisation unterscheidet, daß die Mittel (116), die so ausgebildet sind, daß sowohl der Referenzstrahl als auch der Rücklaufstrahl dieselbe Polarisation haben, Umwandlungsmittel (116) aufweisen, die so ausgebildet sind, daß sie die Polarisation des Rücklaufstrahls, Zielstrahls oder Referenzstrahls oder mehrerer dieser strahlen umwandeln, und daß die Mittel (104, 118), die so ausgebildet sind, daß sie den Referenzstrahl und den Rücklaufstrahl entlang derselben optischen Achse ausrichten, Ablenkungsmittel (104, 118) aufweisen, die zum Ablenken der Strahlen ausgebildet sind.

2. Optische Vorrichtung nach Anspruch 1, die weiterhin auf der optischen Achse einen Photodetektor (106) aufweist.

3. Optische Vorrichtung nach Anspruch 1 oder 2, bei der die Mittel (110, 114), die so ausgebildet sind, daß sie den Zielstrahl auf das Ziel richten, Mittel (110) aufweisen, die so ausgebildet sind, daß sie den Zielstrahl in eine dritte Polarisation umwandeln, und die Ablenkungsmittel (104, 118), die so ausgebildet sind, daß sie den Referenzstrahl oder Rücklaufstrahl ablenken, Retro-Reflexionsmittel (118) aufweisen.

4. Optische Vorrichtung nach Anspruch 3, bei der die Mittel zum Umwandeln des Zielstrahls eine erste Viertelwelleneinrichtung (110) aufweisen, die optisch zwischen die Strahl-Teilermitteln (104) und das Ziel (112) gekoppelt ist, um die Polarisation sowohl des Zielstrahls als auch des Rücklaufstrahls umzuwandeln, und weiterhin eine zweite Viertelwelleneinrichtung (116) aufweisen, die optisch zwischen die Strahl-Teilermitteln (104) und die Retro-Reflexionsmitteln (118) gekoppelt ist, um die Polarisation des Rücklauflichtstrahls umzuwandeln.

5. Optische Vorrichtung nach Anspruch 4, die weiterhin aufweist:

    eine erste Linseneinrichtung (102), die so ausgebildet ist, daß sie den Quellen-Lichtstrahl parallel ausrichtet und ihn auf die strahl-Teilermittel (104) richtet,

    eine zweite Linseneinrichtung (114), die so ausgebildet ist, daß sie den Zielstrahl auf das Ziel (112) fokussiert; und

eine dritte Linseneinrichtung (108), die so ausgebildet ist, daß sie den Referenzstrahl und den Rücklaufstrahl entlang der optischen Achse fokussiert.

6. Optische Vorrichtung nach Anspruch 5, die weiterhin aufweist:

eine optische Quelle (100), die so ausgebildet ist, daß sie den Quellen-Lichtstrahl mit der ersten Polarisation bereitstellt; und

Detektormittel (106), die so ausgebildet sind, daß sie den Referenzstrahl und Rücklaufstrahl mit derselben Polarisation optisch detektieren und ein Informationen über das Ziel enthaltendes Ausgangssignal bereitstellen.

7. Optische Vorrichtung nach Anspruch 6, die weiterhin ein die optischen Quelle (100), die Strahl-Teilermittel (104), die Detektormittel (106), die erste, zweite und dritte Linseneinrichtung (102, 108, 114) und die erste und zweite Viertelwelleneinrichtung (110, 116) stützendes Gehäuse aufweist.

8. Optische Vorrichtung nach einem der vorhergehenden Ansprüche, die weiterhin

eine Abtasteinrichtung (2), die zum abtastenden Führen des Zielstrahles über das Ziel ausgebildet ist, und

eine Verarbeitungseinrichtung (20) aufweist, die die Abtastmittel steuert.

9. Optische Vorrichtung nach einem der vorhergehenden Ansprüche, bei der

die Strahl-Teilermittel so ausgebildet sind, daß sie den Referenzstrahl in eine erste Richtung entlang der optischen Achse richten,

die Ausrichtungsmittel (110, 114) für den Zielstrahl eine erste Viertelwellenplatte (110) aufweisen, die so ausgebildet ist, daß sie den Zielstrahl mit der ersten Polarisation in eine dritte Polarisation umwandelt und den Rücklaufstrahl, welcher von dem Ziel in einer vierten Polarisation reflektiert wird, in die zweite Polarisation umwandelt;

wobei die Strahl-Teilermittel so ausgebildet sind, daß sie den Rücklaufstrahl mit der zweiten Polarisation in einer zweiten Richtung entlang der optischen Achse reflektieren;

und wobei die Umwandlungsmittel (116) eine zweite Viertelwellenplatte (116) aufweisen, die so ausgebildet ist, daß sie den reflektierten Rücklaufstrahl mit der zweiten Polarisation in einen Rücklauflichtstrahl mit einer vierten Polarisation umwandeln;

und weiterhin ein Retro-Reflexionsprisma (118) aufweist, das so ausgebildet ist, daß es den Rücklaufstrahl mit der vierten Polarisation aufnimmt und diesen entlang der optischen Achse in der ersten Richtung mit der dritten Polarisation retroreflektiert;

wobei die zweite Viertelwellenplatte (116) so ausgebildet ist, daß sie den retroreflektierten Rücklaufstrahl in die erste Polarisation aufweisenden Rücklaufstrahl und Referenzstrahl entlang der optischen Achse in die erste Richtung umwandelt.

10. Optische Vorrichtung nach einem der Ansprüche 1 bis 8, bei der

die Strahl-Teilermittel (104) so ausgebildet sind, daß sie den Zielstrahl entlang einer optischen Zielachse richten und den Referenzstrahl mit der ersten Polarisation entlang der optischen Achse übertragen,

wobei die Ausrichtungsmittel (110, 114) für den Zielstrahl eine erste Viertelwellenplatte (110) aufweisen, die so ausgebildet ist, daß sie den Zielstrahl mit der ersten Polarisation in eine dritte Polarisation umwandelt und den Rücklauflichtstrahl, der von dem Ziel in einer vierten Polarisation reflektiert wird, in die zweite Polarisation umwandelt;

wobei die Strahl-Teilermittel so ausgebildet sind, daß sie durch diese hindurch den Rücklauflichtstrahl mit der zweiten Polarisation übertragen;

und wobei die Umwandlungsmittelmittel (116) eine zweite Viertelwellenplatte (116) aufweisen, die so ausgebildet ist, daß sie den übertragenen Rücklaufstrahl mit der zweiten Polarisation in einen Rücklaufstrahl mit der vierten Polarisation umwandelt;

und die weiterhin ein Retro-Reflexionsprisma (118) aufweist, das so ausgebildet ist, daß es den Rücklaufstrahl mit der vierten Polarisation aufnimmt und diesen entlang der optischen Zielachse mit der dritten Polarisation retroreflektiert;

wobei die zweite Viertelwellenplatte (116) so ausgebildet ist, daß sie den retroreflektierten Rücklaufstrahl in die erste Polarisation umwandelt, um eine optische Überlagerungsmischung des Rücklaufstrahls und Referenzstrahls mit der ersten Polarisation entlang der optischen Achse zu bewirken.

11. Vorrichtung zum optischen Abtasten eines Ziels mit einer optischen Vorrichtung nach einem der vorhergehenden Ansprüche, die weiterhin gekennzeichnet ist durch

eine Laserdiode (100), die so ausgebildet ist, daß sie den Quellen-Lichtstrahl mit einer ersten Polarisation bereitstellt;

Detektormittel (106), die so ausgebildet sind, daß sie die Referenz- und Rücklaufstrahlen mit derselben Polarisation auf derselben optischen Achse mit optischer Überlagerung detektieren und ein Informationen über das Ziel enthaltendes Ausgangssignal bereitstellen; eine Abtasteinrichtung (2, 6), die so ausgebildet ist, daß sie den Zielstrahl quer über das Ziel führt; und eine Verarbeitungseinrichtung (20), die so ausgebildet ist, daß sie das Abtasten des Ziels steuert.

12. Vorrichtung nach Anspruch 11, die weiterhin eine Lasertreibereinrichtung aufweist, die so ausgebildet ist, daß sie den von der Laserdiode gebildeten Quellenstrahl mit einer Kippfrequenz moduliert.

13. Vorrichtung nach Anspruch 11 oder 12, bei der die Abtasteinrichtung aufweist: eine Facettenradeinrichtung, die so ausgebildet ist, daß sie den Zielstrahl in einer ersten Richtung abtastend führt; und eine Galvanometereinrichtung, die so ausgebildet ist, daß sie den Zielstrahl in einer zweiten Richtung abtastend führt.

14. Vorrichtung nach Anspruch 11 oder 12, bei der die Abtasteinrichtung einen holographischen Abtaster aufweist.

15. Vorrichtung nach einem der Ansprüche 11 bis 14, bei der die Detektormittel (106) einen PIN-Detektor aufweisen.

16. Vorrichtung nach einem der Ansprüche 11 bis 15, bei der die Verarbeitungseinrichtung (20) das Ausgangssignal von den Detektormitteln empfängt und Mittel aufweist, die so ausgebildet sind, daß sie ein Informationsvolumen von 256 x 256 x 256 über das Ziel speichern.

17. Optisches Detektionsverfahren mit den Schritten: Teilen eines Lichtstrahls in einen Zielstrahl und einen Referenzstrahl, Richten des Zielstrahls auf ein Ziel (112), um einen Rücklaufstrahl zu erhalten, der von dem Ziel reflektiert wird, Bewirken, daß sowohl der Referenzstrahl als auch der Rücklaufstrahl dieselbe Polarisation haben, und Richten sowohl des Referenzstrahls als auch des Rücklaufstrahls entlang derselben optischen Achse, wobei das Verfahren dadurch gekennzeichnet ist, daß der Lichtstrahl eine erste Polarisation aufweist und daß die gebildeten Ziel-und Referenzstrahlen beide auch die erste Polarisation haben, daß der Rücklaufstrahl eine zweite Polarisation hat, die sich von der ersten Polarisation unterscheidet, daß bewirkt wird, daß der Referenzstrahl und der Rücklaufstrahl dieselbe Polarisation aufweisen, indem die Polarisation von einem oder mehreren der Strahlen umgewandelt wird, und daß die Referenz- und Rücklaufstrahlen entlang derselben optischen Achse ausgerichtet werden, indem die Strahlen umgelenkt werden.

**Revendications**

1. Appareil optique comprenant un moyen diviseur de faisceau (104) agencé pour diviser un faisceau lumineux d'une source en un faisceau de visée et en un faisceau de référence, un moyen (110, 114) agencé pour diriger ledit faisceau de visée sur une cible à partir de laquelle il est réfléchi, ce qui a pour effet de produire un faisceau lumineux de retour, un moyen (116) agencé pour faire en sorte que ledit faisceau de référence et ledit faisceau de retour aient tous les deux la même polarisation, et un moyen (104, 118) agencé pour diriger ledit faisceau de référence et ledit faisceau de retour le long du même axe optique, caractérisé en ce que ledit faisceau lumineux de la source possède une première polarisation et en ce que ledit faisceau de visée et ledit faisceau de référence sont formés par ledit moyen diviseur de faisceau (104) de façon à avoir aussi ladite première polarisation, ledit faisceau lumineux de retour ayant une seconde polarisation qui diffère de la première polarisation en ce que ledit moyen (116), qui est agencé pour faire en sorte que ledit faisceau de référence et ledit faisceau de retour aient tous les deux la même polarisation, comprend un moyen convertisseur (116) agencé pour transformer la polarisation de l'un ou plusieurs des faisceaux de retour, de visée ou de référence, et en ce que ledit moyen (104, 118), qui est agencé pour diriger ledit faisceau de référence et ledit faisceau de retour le long du même axe optique, comprend un moyen de déviation (104, 118) agencé pour dévier lesdits faisceaux.

2. Appareil optique selon la revendication 1, comprenant en outre un photodétecteur (106) placé sur ledit axe optique.

3. Appareil optique selon la revendication 1 ou 2, dans lequel ledit moyen (110, 114), qui est agencé pour diriger ledit faisceau de visée sur la cible, comprend un moyen (110) agencé pour transformer ledit faisceau de visée en lui donnant une troisième polarisation, et ledit moyen de déviation (104, 118), qui est agencé pour dévier ledit faisceau de référence ou ledit faisceau de retour, comprend un moyen rétroréflecteur (118).

4.  Appareil optique selon la revendication 3, dans lequel ledit moyen agencé pour convertir ledit faisceau de visée comprend un premier moyen quart d'onde, couplé optiquement entre ledit moyen diviseur de faisceau (104) et ladite cible (112), pour transformer la polarisation dudit faisceau de visée et celle dudit faisceau de retour; et comprenant en outre un second moyen quart d'onde (116), couplé optiquement entre ledit moyen diviseur de faisceau (104) et ledit moyen rétroréflecteur (118), pour transformer la polarisation dudit faisceau de retour.

5.  Appareil optique selon la revendication 4, comprenant en outre :
    un premier système de lentille (102) agencé pour transformer ledit faisceau lumineux de la source en un faisceau a rayons parallèles et pour le diriger vers ledit moyen diviseur de faisceau (104),
    un second système de lentille (114) agencé pour focaliser ledit faisceau de visée sur ladite cible (112); et
    un troisième système de lentille (108) agencé pour focaliser ledit faisceau de référence et ledit faisceau de retour sur ledit axe optique.

6.  Appareil optique selon la revendication 5, comprenant en outre :
    un moyen (100) formant source optique et agencé pour fournir ledit rayon lumineux de la source possédant ladite première polarisation; et
    un moyen détecteur (106) agencé pour détecter optiquement ledit faisceau de référence et ledit faisceau de retour, de même polarisation, et pour fournir un signal de sortie contenant une information sur ladite cible.

7.  Appareil optique selon la revendication 6, comprenant en outre un boîtier supportant ledit moyen (100) formant source optique, ledit moyen diviseur de faisceau (104), ledit moyen détecteur (106), lesdits premier, second et troisième systèmes de lentille (102, 108, 114), et lesdits premier et second moyens quart d'onde (110, 116).

8.  Appareil optique selon l'une quelconque des revendications précédentes, comprenant en outre :
    un dispositif de balayage (2) agencé pour faire en sorte que ledit faisceau de visée balaye ladite cible; et
    un moyen de traitement (20) qui commande ledit dispositif de balayage.

9.  Appareil optique selon l'une quelconque des revendications précédentes, dans lequel:
    ledit moyen diviseur de faisceau est agencé pour diriger ledit faisceau de référence dans une première direction le long dudit axe optique;
    ledit moyen (110, 114) pour diriger ledit faisceau de visée comprend une première lame quart d'onde (110) agencée pour transformer ladite première polarisation du faisceau de visée en une troisième polarisation et pour transformer le faisceau de retour, qui est réfléchi par ladite cible avec une quatrième polarisation, en lui donnant ladite seconde polarisation;
    ledit moyen diviseur de faisceau étant agencé pour réfléchir ledit faisceau de retour, ayant la seconde polarisation, dans une seconde direction le long dudit axe optique;
    et dans lequel ledit moyen convertisseur (116) comprend une seconde lame quart d'onde (116) agencée pour transformer le faisceau réfléchi de retour ayant la seconde polarisation en un faisceau de retour ayant la quatrième polarisation;
    et comprenant en outre un prisme rétroréflecteur (118) agencé pour recevoir ledit faisceau de retour ayant la quatrième polarisation et pour le réfléchir le long dudit axe optique dans ladite première direction avec ladite troisième polarisation;
    ladite seconde lame quart d'onde (116) étant agencée pour transformer ledit faisceau de retour rétroréfléchi en lesdits faisceaux de retour et de référence ayant la première polarisation le long dudit axe optique dans ladite première direction.

10.  Appareil optique selon l'une quelconque des revendications 1 à 8, dans lequel :
    ledit moyen diviseur de faisceau (104) est agencé pour diriger ledit faisceau de visée le long d'un axe optique de visée et pour transmettre ledit faisceau de référence ayant la première polarisation le long dudit axe optique;
    ledit moyen (110, 114) pour diriger ledit faisceau de visée comprend une première lame quart d'onde (110) agencée pour transformer la première polarisation dudit faisceau de visée en une troisième polarisation et pour transformer le faisceau lumineux de retour, qui est réfléchi par ladite cible avec une quatrième polarisation, en lui donnant ladite seconde polarisation;
    ledit moyen diviseur de faisceau étant agencé pour transmettre à travers lui ledit faisceau de retour ayant la seconde polarisation;

et dans lequel ledit moyen convertisseur (116) comprend une seconde lame quart d'onde (116) agencée pour transformer le faisceau de retour transmis avec la seconde polarisation en un faisceau de retour ayant ladite quatrième polarisation;

et comprenant en outre un prisme rétroréflecteur (118) agencé pour recevoir ledit faisceau de retour ayant la quatrième polarisation et pour le renvoyer par réflexion le long dudit axe optique de visée avec ladite troisième polarisation;

ladite seconde lame quart d'onde (116) étant agencée pour transformer le faisceau de retour rétroréfléchi en lui donnant ladite première polarisation afin de provoquer un mélange optique hétérodyne desdits faisceaux de retour et de référence ayant la première polarisation le long dudit axe optique.

11. Appareil pour balayer optiquement une cible comprenant un appareil optique selon l'une quelconque des revendications précédentes, et caractérisé en outre par :

une diode laser (100) agencée pour fournir ledit faisceau lumineux de source ayant une première polarisation;

un moyen détecteur (106) agencé pour effectuer une détection optique hétérodyne sur lesdits faisceaux de référence et de retour ayant la même polarisation, sur le même axe optique, et pour fournir un signal de sortie contenant une information sur ladite cible;

un moyen de balayage (2, 6) agencé pour faire en sorte que ledit faisceau de visée balaye ladite cible; et

un moyen de traitement (20) agencé pour commander le balayage de ladite cible.

12. Appareil selon la revendication 11, comprenant en outre un moyen de pilotage de laser agencé pour moduler en fréquence, à la manière d'un balayage de fréquence, le faisceau de la source produit par ladite diode laser.

13. Appareil selon la revendication 11 ou 12, dans lequel ledit moyen de balayage comprend :

un moyen à roue à facettes agencé pour que ledit faisceau de visée effectue un balayage dans une première direction; et

un moyen à galvanomètre agencé pour que ledit faisceau de visée effectue un balayage dans une seconde direction.

14. Appareil selon la revendication 11 ou 12, dans lequel ledit moyen de balayage comporte un dispositif à balayage holographique.

15. Appareil selon l'une quelconque des revendications 11 à 14, dans lequel ledit moyen détecteur (106) comporte un photodétecteur à diode PIN.

16. Appareil selon l'une quelconue des revendications 11 a 15, dans lequel ledit moyen de traitement (20) reçoit ledit signal de sortie provenant dudit moyen détecteur et contient un moyen agencé pour emmagasiner un volume de 256 x 256 x 256 informations au sujet de ladite cible.

17. Procédé de détection optique comprenant les étapes consistant à diviser un faisceau lumineux en un faisceau de visée et en un faisceau de référence, à diriger ledit faisceau de visée sur une cible (112) pour produire un faisceau de retour qui est est réfléchi par ladite cible, à faire en sorte que ledit faisceau de référence et ledit faisceau de retour aient tous les deux la même polarisation, et a diriger à la fois ledit faisceau de référence et ledit faisceau de retour le long du même axe optique, ce procédé étant caractérisé en ce que ledit faisceau lumineux possède une première polarisation et en ce que lesdits faisceaux de visée et de référence formés possèdent aussi tous les deux ladite première polarisation, en ce que ledit faisceau de retour possède une seconde polarisation qui diffère de ladite première polarisation, en ce que l'on fait en sorte que ledit faisceau de référence et ledit faisceau de retour aient la même polarisation en transformant la polarisation de l'un ou plusieurs desdits faisceaux, et en ce que lesdits faisceaux de référence et de retour sont dirigés le long du même axe optique en déviant lesdits faisceaux.

# F I G. I

EP 0 283 222 B1

# FIG. 2A

**OPTICAL HEAD CONTROL**

**70**

**RF SECTION**

TEMPERATURE CONTROLLER ~ 32

12

RF AMPLIFIER 74 ← AMPLIFIER 72 ← SENSOR OPTICS 34

36

LOCAL OSCILLATOR 78

MIXER 76

LASER DRIVER 10

IF AMPLIFIER 80

LIMITER 82

D/A CONVERTOR 38

WAVEFORM MEMORY 42

DISCRIMINATOR 84

TIMING GENERATOR 40

DATA INTERFACE 44

86

**TRANSMITTER**

VIDEO AMPLIFIER 88

MATCHED FILTER 90

SAMPLE & HOLD AND A/D CONVERTER 92

DMA CHANNEL 94

**BASE BAND CIRCUITRY**

EP 0 283 222 B1

# F I G. 2B

EP 0 283 222 B1

# F I G. 3

DETECTOR — 106

POLARIZING BEAM SPLITTER

108

102

100

LASER

104

110

114

112

116

QUARTER WAVE PLATES

TARGET

RETROREFLECTING PRISM

118

EP 0 283 222 B1

19

FIG. 4

*F I G. 5*